# EUROPEAN PATENT SPECIFICATION

(11) **EP 0 604 855 B1**
(45) Date of publication and mention of the grant of the patent: **25.02.1998**
(21) Application number: 93120405.1
(22) Date of filing: 17.12.1993
(51) Int. Cl.: C08F 10/00, C08F 4/634

(54) **Components and catalysts for the polymerization of olefins**
Komponenten und Katalysatoren für die Olefinpolymerisation
Composants et catalyseurs pour la polymérisation d'oléfines

(30) Priority: 29.12.1992 IT MI922978
(43) Date of publication of application: 06.07.1994
(73) Proprietor: Montell Technology Company bv, 2132 MS Hoofddorp (NL); MONTELL NORTH AMERICA INC., Wilmington Delaware 19850-5439 (US)
(72) Inventor: Albizzati, Enrico, I-28041 Arona (NO) (IT); Giannini, Umberto, I-20133 Milano (IT)
(74) Representative: Zanoli, Enrico

(56) References cited:
- FR-A- 2 392 036

## Description

The present invention relates to catalyst components for the olefin polymerization, catalysts obtained therefrom and the use of said catalysts for the polymerization of α-olefins, in particular ethylene and its mixtures with olefins CH₂=CHR, wherein R is a hydrocarbon radical having 1-10 carbon atoms.

Components of the invention comprise a compound of a transition metal comprising at least one arene, said compound being supported on a magnesium halide having specified surface area and/or porosity values.

Compounds of transition metals containing arenes and their use for polymerizing olefins are known since many time in literature. Generally, these compounds have formula Metal·(arene)₂, wherein the metal (generally V or Ti) has valence 0 and the arene is generally benzene or toluene, or formula Metal·(arene)·Al₂Cl₈, wherein the metal, usually Ti or Zr, has valence 2.

Examples of catalysts of this type are described in patents FR 2,338,077, BE 867,495, GB 2,035,338 and GB 2,096,122. These catalysts, besides giving polymer in rather low yields, are not endowed with morphologic properties suitable for the working conditions of modern processes for the gaseous phase polymerization. In particular, Fr 2,338,077 describes catalyst components obtained by supporting (durene)·TiAl₂Cl₈ or Ti·(toluene)₂ on anhydrous MgCl₂ activated by grinding. Components thus prepared are used together with an electron donor compound and an Al-alkyl compound for the propylene polymerization. Polymerization yields are always very low, the Ti content in the polymer is always higher than about 15 ppm and the resulting polymer has a low Isotactic Index.

Low polymerization yields are also obtained in ethylene polymerization. Examples of homopolymerization of ethylene and copolymerization with 1-hexene show as the titanium content in the polymer is always higher than 10 ppm; furthermore, the values reported for Melt Index are indicative for rather low molecular weights.

In addition, the above described catalysts are not suitable for the gaseous phase polymerization in that they do not possess the necessary morphologic characteristics and give polymers having properties such as bulk density, not suitable for carrying out gaseous phase processes.

It has been now found that by supporting transition metal compounds containing arenes on magnesium halides having specified characteristics it is possible to obtain catalysts endowed with high activity when used for polymerizing olefins.

In particular with components of the invention and catalysts obtained therefrom it is possible to prepare ethylene copolymers, optionally containing lower percentages of a diene, having a very low crystallinity.

Components of the invention comprise a compound of transition metal selected from Ti, V, Zr and Hf containing at least one arene and supported on a magnesium halide having at least one of the following characteristics:
(I) surface area higher than 300 m²/g(BET);
(II) mercury porosity higher than 0.5 cm³/g.

As used herein the term "arene" means the class of organic compounds containing at least one substituted or un-substituted benzene ring. Examples of suitable arenes include: benzene, toluene, naphthalene, xylene, trimethylbenzene, triphenylbenzene, tetraisopropylbenzene, tetramethylbenzene, hexamethylbenzene and chlorobenzene. In metal compounds containing arenes the metal is linked to the arene by π bonds.

Mercury porosity is determined by the method described hereinafter.

The magnesium dihalide can be advantageously used in form of spherical particles having sizes comprised between 5 and 150 µm; as spherical particles are meant those particles whose ratio between the greater axis and the smaller axis is equal to or lower than 1.5 and preferably lower than 1.3.

Among magnesium halides MgCl₂ is the preferred one. Preferably, the surface area has values from 300 to 900 m²/g and the mercury porosity is preferably from 0.8 to 2.2 cm³/g.

The magnesium dihalides used as supports are obtained by partial or complete dealcoholation of adducts MgX₂·nR^{I}OH, wherein X is halogen, R^{I} is a C1-C12 hydrocarbon radical and n is a number from 2 to 6. When R^{I} is ethyl, propyl or butyl, the number of alcohol mols is preferably 3.

The dealcoholation of the adduct is carried out by shifting the alcohol content from the starting value to lower values, for example 1 mol, by heating at a temperature increasing from 50°C to 150°C and working under nitrogen stream; the adduct is then further dealcoholated, always by thermal treatment, until the alcohol content reaches 0.05-0.3 mols for each mol of magnesium dihalide.

Alternatively, the adduct MgX₂·nR^{I}OH, or the adduct already partially thermally dealcoholated up to a residue alcohol content of 1 mol, can be reacted with compounds capable of decomposing the adduct itself by reaction with the OH group of the alcohol until the alcohol is even completely removed from the adduct. Examples of reactive compounds are organometal compounds of elements from the I to III group of the Periodic Table and Si and Sn halogenated compounds. In particular, Al-alkyls, for example Al-trialkyls and Al-dialkylhalides, SiCl₄ and SnCl₄ can be mentioned.

Methods for the preparation of adducts are described for example in US patents 4,469,648; 5,100,849 and 4,829,034.

Working conditions for the thermal and chemical dealcoholation are described in USP 4,399,054 and in patent applications EP-A-553805 and EP-A-553806. In particular, by working according to USP 4,399,054 magnesium halides having a surface area higher than 300 m²/g are obtained.

Examples of transition metal compounds containing at least one arene are those of formula:

M·(arene)₂ (A)

wherein the transition metal M selected from Ti, V, Zr and Hf has valence 0. Preferably the arene is benzene, toluene, xylene, trimethylbenzene, triphenylbenzene, tetraisopropylbenzene, tetramethylbenzene, hexamethylbenzene or chlorobenzene. These compounds can be prepared for example according to methods described in Journal of Chemical Society Chem. Comm. 1973, pages 866-867, and in patent application EP-A-398402 and EP-A-437897. Examples of these compounds are Ti·(benzene)₂, Ti·(toluene)₂, Zr·(benzene)₂, Zr·(toluene)₂, V·(mesitylene)₂.

The transition metal can have also a valence different from 0; examples of these compounds of transition metals containing arene are those having formula:

M^{I}·(arene) ·Al₂X₈₋ₙR^{V} ₙ (B)

wherein X is halogen, M^{I} is Ti, Zr or Hf, R^{V} is an alkyl radical having 1-4 carbon atoms and n is a number from 0 to 4.

Among compounds having formula (B) those wherein M is titanium, X is chlorine, R^{V} is ethyl or methyl and n is a number from 0 to 2 are preferred. Examples of these compounds are (arene) · TiAl₂Cl₈, (arene) · TiAl₂Br₈, (arene) · TiAl₂I₈, (arene) · TiAl₂Cl₆Et₂, (arene) · TiAl₂Cl₃Et₃, (arene) · TiAl₂Cl₄Et₄, wherein arene is preferably benzene, toluene, xylene, trimethylbenzene, triphenylbenzene, tetraisopropylbenzene, tetramethylbenzene, hexamethylbenzene, chlorobenzene.

A way for the synthesis of these compounds is that described in Z. Naturforsch. B, vol 10 (1955), page 665.

Further examples of transition metal compounds useable in the components of the invention are vanadium compounds having formula:

V·(arene)₂·AlX₄ (C)

wherein X is halogen and the arene is benzene, toluene, xylene, trimethylbenzene, triphenylbenzene, tetraisopropylbenzene, tetramethylbenzene, hexamethylbenzene or chlorobenzene.

Catalyst components of the invention can be suitably prepared by contacting the transition metal compound with the magnesium halide in a solvent selected from aromatic hydrocarbons and halogenated hydrocarbons, at temperatures from 0 to 100°C and for a time comprised between 15 min. and 4 hours.

An alternative to this preparation method consists in reacting the transition metal with TiCl₄, according to the method described in USP 4,987,111. The reaction can take place before, during or after having supported the compound of the transition metal on the magnesium halide. Components thus obtained are particularly suitable for the preparation of ethylene polymers and copolymers.

When components of the invention are used for the stereoregular polymerization of olefins such as propylene, 1-butene, 4-methyl-1-pentene it is suitable to incorporate in the solid catalyst component an electron donor compound (internal donor) selected for example among ethers, esters, amines, chetones and silicon compounds. In particular, the internal electron donor compound can be selected from ethers and alkyl, cycloalkyl and aryl esters of polycarboxylic acids such as for example esters of phthalic and maleic acid, in particular n-butylphthalate, diisobutylphthalate, di-n-octylphthalate.

Other electron donor compounds advantageously useable are 1,3-diethers of formula: 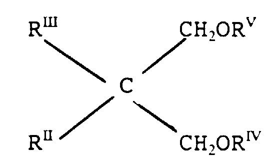 wherein R^{II}, R^{III} are the same or different and are C1-C18 alkyl, C3-C18 cycloalkyl, C6-C18 aryl radicals and R^{IV}, R^{V} are the same or different and are C1-C4 alkyl radicals.

The internal electron donor compound is generally present in molar rations between 1:4 and 1:20 to the magnesium.

Components of the invention are reacted with organometal aluminium compounds, for example Al-alkyl compounds, in particular Al-trialkyls, such as for example Al-trimethyl, Al-triethyl, Al-triisobutyl, Al-tri-n-butyl, to give catalysts endowed with high activity in the polymerization of olefins CH₂=CHR, wherein R is hydrogen or a hydrocarbon radical having 1-10 carbon atoms. Other suitable organometallic aluminium compounds are the alumoxane compounds, which are a linear, branched or cyclic compounds containing at least one group of the formula (E): 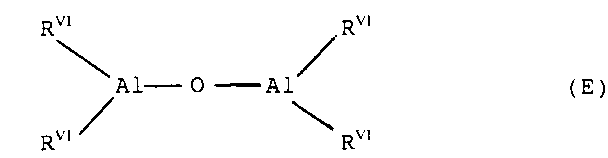 wherein the R^{VI} substituents are the same or different and are a -O-Al(R^{VI})₂ group or a R^{II} substituent, wherein R^{II} is C1-C18 alkyl, C3-C18 cycloalkyl, C6-C18 aryl radical and, optionally, some of the R^{VI} substituents can be a halogen atom.

In particular, alumoxane compounds which can be used in the process of the present invention are the linear alumoxanes represented by the formula (F): 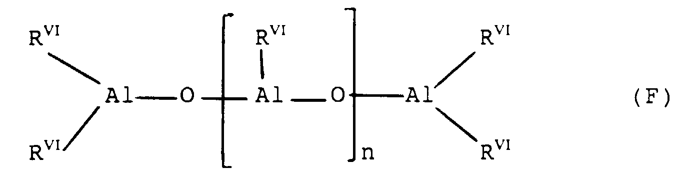 wherein n is 0 or an integer from 1 to 40, and the cyclic alumoxanes represented by the formula (G): 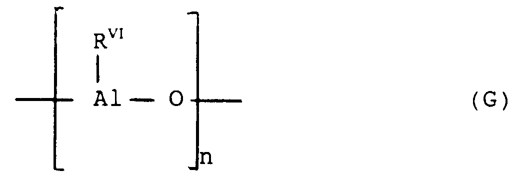 wherein n is an integer from 2 to 40.

In the formulas (F) and (G), R^{VI} is as defined above, preferably is a C₁-C₄ hydrocarbon group and, more preferably, a methyl group or isobutyl group. Non limitative examples of alumoxane compounds suitable for the process of the present invention are methylalumoxane (MAO) and tetraisobutyl-di-alumoxane (TIBAO).

Generally, in case of the stereoregular polymerization of α-olefins, when preparing the catalyst also an electron donor compound (external donor) is used, which can be used in the presence or absence of the internal electron donor. Contrary to what generally happens with Ziegler-Natta catalysts, with components of the invention it is in fact possible to obtain polymers having a high Isotactic Index without using an internal electron donor compound.

The external donor is preferably selected among silanic compounds containing at least one Si-OR bond having the formula R^{II}₄₋ₙSi(OR^{IV})ₙ, wherein R^{II} is C1-C18 alkyl, C3-C18 cycloalkyl, C6-C18 aryl radical, R^{IV} is a C1-C4 alkyl radical and n is a number from 1 to 4. Examples of these silanes are phenyltriethoxysilane, diphenyl-dimethoxysilane, methyl-cyclohexyl-dimethoxysilane, methyl-t-butyl-dimethoxysilane, dicyclopentyl-dimethoxysilane.

1,3-Diethers having the previously described formula also can be advantageously used as external donors.

As previously indicated, components of the invention and catalysts obtained therefrom are applied in processes for the preparation of different types of olefin polymers and in particular elastomeric copolymers of ethylene and propylene and elastomeric terpolymers of ethylene with propylene and lower percentages of a diene having a weight content of units derived from ethylene comprised between about 30 and 70%. Catalysts obtained by reacting the components according to the present invention with organometal aluminum compounds, such as Al-trialkyl compounds and alumoxanes, can be used in processes for the preparation of polymers of ethylene and copolymers of ethylene containing up to 20% of an α-olefin having from 3 to 12 carbon atoms. Said catalysts can also be used in processes for the preparation of elastomeric copolymers of ethylene with an α-olefin having from 3 to 12 carbon atoms, optionally with up to 10% by mol of a diene, said copolymers containing from 20% to 80% by mols of ethylene units. When the catalyst comprises also an electron donor compound (external donor), it can be used in processes for the preparation of crystalline polymers of propylene and copolymers of propylene containing up to 20% by mols of ethylene and/or an α-olefin having from 4 to 12 carbon atoms.

The polymerization of olefins in the presence of catalysts obtained from catalyst components of the invention can be carried out according to known techniques either in liquid or in gaseous phase using for example the known technique of the fluidized bed or under conditions wherein the polymer is mechanically agitated.

The following examples are given to illustrate the invention but are not limitative of the same.

The properties indicated are measured according to the following methods:
- Porosity and surface area with nitrogen: measured according to BET method (apparatus used SORPTOMATIC 1900 by Carlo Erba).
- Porosity and surface area with mercury: measured by dipping a weighted sample in a known amount of mercury inside a dilatometer and then hydraulically increasing gradually the mercury pressure up to 2000 kg/cm². The pressure at which mercury enters the pores is depending on the diameter of pores themselves. The measure is carried out using a porosimeter "porosimeter 2000 series" by Carlo Erba. From the mercury volume lowering data and values of the applied pressure the porosity, pore distribution and surface area are calculated.
- Comonomer content: percentage by weigh of comonomer measured by the I.R. spectrum.
- Crystallinity: measured by X-ray analysis.

### EXAMPLES

### GENERAL PROCEDURES

### Preparation of the support

The adduct magnesium chloride and alcohol was prepared following the method described in Example 1 of USP 4,399,054. The adduct containing about 3 mols of alcohol was suspended in 80 cm³ of anhydrous n-heptane in a 500 cm³ glass reactor. While keeping the temperature between 0 and 5°C, 215 cm³ of a 0.85 molar n-heptane solution of Al-triethyl was added over 1 hour and under stirring. The whole was heated at 80°C and the suspension was maintained at this temperature for 2 hours. The mixture was then filtered off and the solid was washed 5 times with 120 cm³ of heptane at 80°C. After drying at 45°C under vacuum, MgCl₂ was obtained in the form of spherical particles having a surface area of 840 m²/g.

### Preparation of (benzene)·TiAl₂Cl₈

In a 1 l flask 46.74 g of AlCl₃ (0.350 mols), 7.94 g of metal Al (0.294 mols) and 250 cm³ of benzene were introduced under nitrogen atmosphere. Whilst stirring, the suspension was heated up to the boiling point of benzene and then a solution containing 24 cm³ of TiCl₄ (0.19 mols) in 50 cm³ of benzene was added dropwise. After 16 hours the solvent was evaporated at reduced pressure and a violet solid was separated.

### Preparation of (arene)·TiAl₂Cl₈.

Compounds of transition metals containing different arenes were prepared by a reaction of the exchange of ligands according to the following method.

In a 250 cm³ flask, under nitrogen, 5.45 mmols of (benzene)·TiAl₂Cl₈ dissolved in 80 cm³ of benzene were supplied and at 20°C 13 mmols of the new arene ligand were added while allowing the whole to react for 1.5 hour. The precipitate formed was filtered off, washed with n-hexane and dried under vacuum. The exchange which took place between benzene and arene was verified by G.L.C.

### Supporting of (arene)·TiAl₂Cl₈ on MgCl₂

1.9 g of MgCl₂ obtained by the previously described manner and 0.4 g of (arene)·TiAl₂Cl₈ dissolved in 30 cm³ of benzene were introduced in a 100 cm³ round bottomed flask under nitrogen. The whole was reacted at 80°C for 2 hours and the solid was filtered off by filtration and washed with n-hexane.

### EXAMPLE 1

### ETHYLENE POLYMERIZATION

A catalyst component, obtained by supporting (benzene)·TiAl₂Cl₈ on MgCl₂ according to the previously described method, was used. An amount of component containing 0.5 mg of titanium was introduced under nitrogen into a 2 liter steel autoclave containing 1000 cm³ of anhydrous heptane. 5 mmols of Al-triisobutyl were added and the whole was heated at 70°C. 5 atm hydrogen and 8 atm ethylene were then supplied while maintaining the pressure constant for the whole polymerization by supplying ethylene. After 3 hours the polymerization was interrupted, the polymer was filtered off and dried. 500 g of polymer were obtained having an intrinsic viscosity (measured in tetrahydronaphthalene at 135°C) equal to 1.94.

### EXAMPLE 2

Example 1 was repeated using a catalyst component obtained by supporting (naphthalene)·TiAl₂Cl₈ (prepared by exchange reaction of ligands according to the general procedure previously described) on MgCl₂. 230 g of polymer having an intrinsic viscosity equal to 1.88 were obtained.

### EXAMPLES 3-6

A series of tests for the copolymerization of ethylene with propylene were carried out using catalyst components obtained by supporting on MgCl₂ compounds of the formula (arene)·TiAl₂Cl₈. The preparation of the catalyst components was carried out according to the previously described general procedure. Polymerization conditions are described hereinafter.

### General method for copolymerizing C₂/C₃

In a 2000 cm³ steel autoclave equipped with stirrer and maintained at a constant temperature of 20°C there were introduced under nitrogen 600 cm³ of propylene and ethylene until a total pressure of 13.3 atm. Thereafter, a suspension containing the solid catalyst component and 5 mmols of Al-triisobutyl was injected. The polymerization was carried out at 20°C for 1 hour continuously supplying ethylene in order to keep the pressure constant. Unreacted monomers were then discharged and the polymer was recovered and dried under vacuum. In Table 1 arenes present in metal compounds used are listed as well the characteristics of polymers which were obtained.

### EXAMPLES 7-9

A series of tests for the terpolymerization of ethylene with propylene and butadiene was carried out using catalyst components obtained by supporting on MgCl₂ compounds of formula (arene)·TiAl₂Cl₈. The preparation of the catalyst components was carried out according to the previously described general procedure. Polymerization conditions are described hereinafter.

### General method for terpolymerizing C₂/C₃/butadiene

In a 2000 cm³ steel autoclave provided with stirrer and kept at the constant temperature of 20°C, 650 cm³ of propylene and 60 g of butadiene were introduced under nitrogen; ethylene was then introduced until a total pressure of 11.8 atm was reached. Then a suspension containing an amount of solid catalyst component corresponding to 1 mg of titanium and 5 millimols of Al-triisobutyl was injected. The polymerization was carried out at 20°C for 1 hour by continuously supplying ethylene in order to keep the pressure constant. After the end of the polymerization unreacted monomers were discharged and the polymer was recovered and dried under vacuum. In Table 2 arenes present in metal compounds used as well as the characteristics of polymers which were obtained are listed.

### EXAMPLES 10-11

Two propylene polymerization tests were carried out by working in liquid monomer and using as solid component the product which was obtained by supporting (benzene)·TiAl₂Cl₈ on MgCl₂ according to the previously described general procedure. The test was carried out in a 2 litres autoclave fed with 1000 cm³ of propylene; thereafter the solid component, 5 mmols of Al-triethyl and an electron donor compound (external donor) in quantity corresponding to a molar ratio Al/donor=20 were added. Using as electron donor compound phenyl-triethoxysilane, a polymer was obtained having Isotactic Index equal to 92.2 and intrinsic viscosity equal to 1.76. The yield was 10 kg polypropylene per gram of solid component (500,000 g/g Ti). Using as electron donor compound diphenyl-dimethoxysilane a polymer was obtained having Isotactic Index equal to 93.1 and intrinsic viscosity equal to 1.50. The yield was 12 Kg polypropylene per gram of solid component (600,000 g/g Ti).

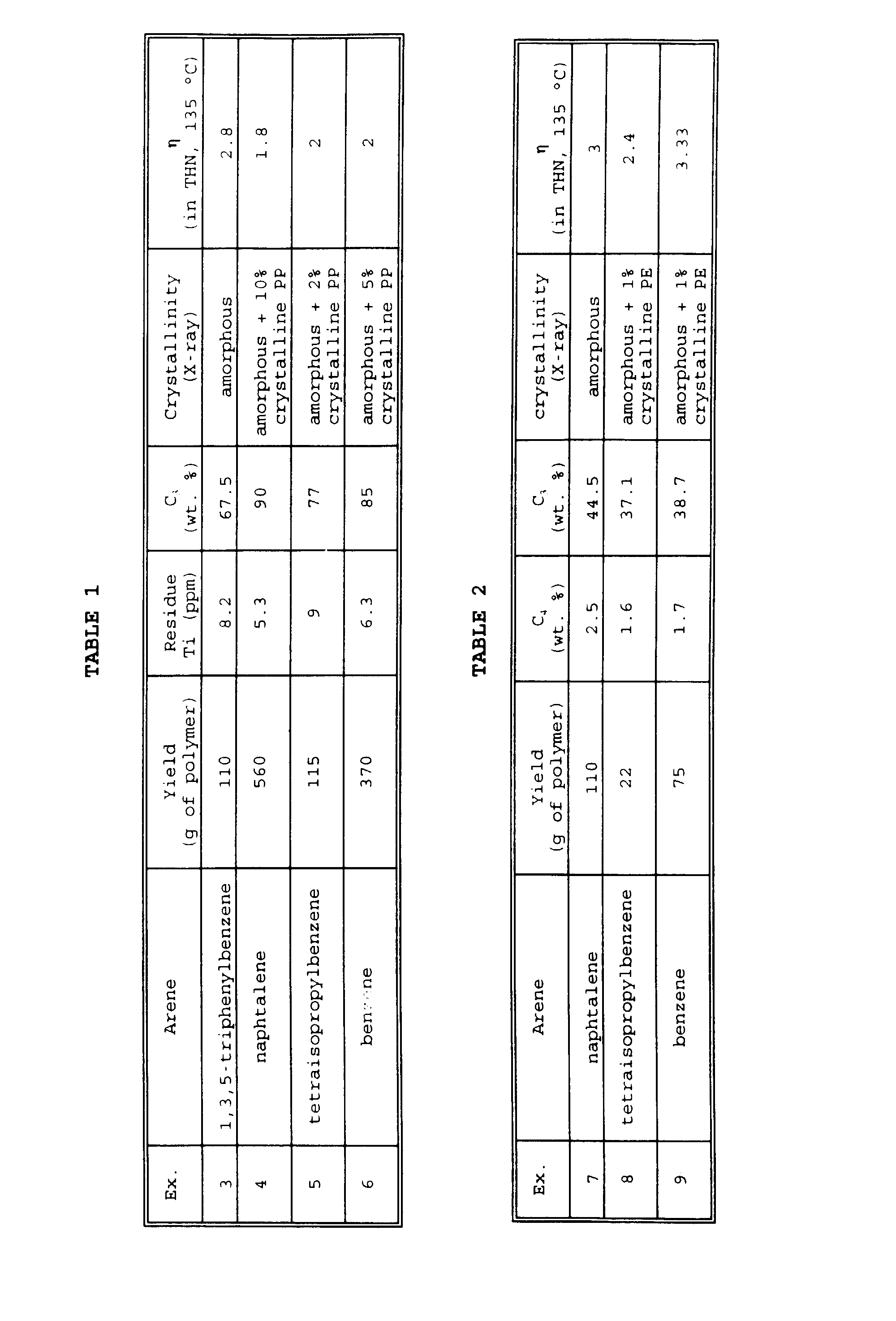

## Claims

1. A catalyst component for the polymerization of α-olefins having the formula CH₂=CHR, wherein R is hydrogen or a hydrocarbon radical having 1-10 carbon atoms, comprising a compound of a transition metal selected from the group consisting of Ti, V, Zr and Hf and containing at least one arene, which is supported on a magnesium halide having at least one of the following characteristics:
(I) surface area higher than 300 m²/g.
(II) mercury porosity higher than 0.5 cm³/g.

2. The catalyst component according to claim 1 wherein the magnesium halide is MgCl₂ having a surface area from 300 to 900 m²/g, a spherical morphology and a particle sizes from 5 to 150 µm.

3. The catalyst component according to claim 1 wherein the magnesium dihalide is MgCl₂ having a porosity from 0.8 to 2.2 cm³/g, a spherical morphology and a particle sizes from 5 to 150 µm.

4. The catalyst component according to claim 1 wherein the arene is selected from the group consisting of benzene, toluene, xylene, trimethylbenzene, triphenylbenzene, tetraisopropylbenzene, tetramethylbenzene, hexamethylbenzene and chlorobenzene.

5. The catalyst component according to claim 1 wherein the compound of the transition metal containing at least one arene has one of the following formulae:
M·(arene)₂ (A)
wherein M is Ti, V, Zr or Hf and has valence 0;
M^{I}·(arene)·Al₂X₈₋ₙR^{V} ₙ (B)
wherein X is halogen, M^{I} is Ti, Zr or Hf, R^{V} is a C1-C4 alkyl radical and n is a number from 0 to 4;
V·(arene)₂·AlX₄ (C)
wherein X is halogen.

6. The catalyst component according to claim 5 wherein the arene is selected from benzene, toluene, xylene, trimethylbenzene, triphenylbenzene, tetraisopropylbenzene, tetramethylbenzene, hexamethylbenzene, chlorobenzene and X is chlorine.

7. The catalyst component according to claim 1 wherein the magnesium halide is obtained from the dealcoholation of spherical adducts having the formula MgX₂·nR^{I}OH, wherein X is halogen, R^{I} is a C1-C12 hydrocarbon radical and n is a number from 2 to 6.

8. The catalyst component according to claim 7 wherein the magnesium halide is MgCl₂.

9. The catalyst component according to claim 1 further comprising an electron donor compound (internal donor).

10. A process for the preparation of the catalyst component according to claim 1 wherein the magnesium halide is reacted with a transition metal compound containing an arene in a solvent selected from the group consisting of aromatic hydrocarbons, halogenated hydrocarbons and mixtures thereof.

11. The process of claim 10 wherein the transition metal compound is allowed to react with TiCl₄ before, during or after the contact with the magnesium halide.

12. A catalyst for the polymerization of α-olefins of the formula CH₂=CHR, wherein R is hydrogen or a hydrocarbon radical having 1-10 carbon atoms, comprising the reaction product between the catalyst component according to any of the claims from 1 to 10 and an organometal aluminium compound.

13. The catalyst according to claim 12 wherein the organometal aluminium compound is an Al-trialkyl compound.

14. The catalyst according to claim 12 wherein the organometal aluminium compound is an alumoxane.

15. The catalyst of claim 12 further comprising an electron donor compound (external donor).

16. A process for the polymerization of one or more α-olefins having the formula CH₂=CHR, wherein R is hydrogen or a hydrocarbon radical having 1-10 carbon atoms, comprising using the catalyst component according to any of the claims from 1 to 10.

17. A process for the polymerization of one or more α-olefins having the formula CH₂=CHR, wherein R is hydrogen or a hydrocarbon radical having 1-10 carbon atoms, comprising using the catalyst according to any of the claims from 12 to 15.

18. A process for the preparation of polymers of ethylene and copolymers of ethylene containing up to 20% of an α-olefin having from 3 to 12 carbon atoms, comprising using the catalyst according to any of the claims from 12 to 15.

19. A process for the preparation of elastomeric copolymers of ethylene with an α-olefin having from 3 to 12 carbon atoms, optionally with up to 10% by mol of a diene, said copolymers containing from 20% to 80% by mols of ethylene units, comprising using the catalyst according to any of the claims from 12 to 15.

20. A process for the preparation of crystalline polymers of propylene and copolymers of propylene containing up to 20% by mols of ethylene and/or an α-olefin having from 4 to 12 carbon atoms, comprising using the catalyst according to claim 15.

## Patentansprüche

1. Katalysatorkomponente zur Polymerisation von α-Olefinen der Formel CH₂=CHR, worin R Wasserstoff oder einen Kohlenwasserstoffrest mit 1 bis 10 Kohlenstoffatomen darstellt, umfassend eine mindestens ein Aren enthaltende Verbindung eines aus der Gruppe, bestehend aus Ti, V, Zr und Hf, ausgewählten Übergangsmetalls, die von einem Magnesiumhalogenid, das mindestens eine der nachstehenden Eigenschaften:
(I) Oberfläche größer als 300 m²/g,
(II) Quecksilberporosität größer als 0,5 cm³/g, aufweist,
getragen wird.

2. Katalysatorkomponente nach Anspruch 1, wobei das Magnesiumhalogenid MgCl₂ darstellt, das eine Oberfläche von 300 bis 900 m²/g, eine kugelförmige Morphologie und eine Teilchengröße von 5 bis 150 µm aufweist.

3. Katalysatorkomponente nach Anspruch 1, wobei das Magnesiumdihalogenid MgCl₂ darstellt, das eine Porosität von 0,8 bis 2,2 cm³/g, eine kugelförmige Morphologie und eine Teilchengröße von 5 bis 150 µm aufweist.

4. Katalysatorkomponente nach Anspruch 1, wobei das Aren ausgewählt ist aus der Gruppe, bestehend aus Benzol, Toluol, Xylol, Trimethylbenzol, Triphenylbenzol, Tetraisopropylbenzol, Tetramethylbenzol, Hexamethylbenzol und Chlorbenzol.

5. Katalysatorkomponente nach Anspruch 1, wobei die Verbindung des mindestens ein Aren enthaltenden Übergangsmetalls eine der nachstehenden Formeln aufweist:
M·(Aren)₂ (A)
worin M Ti, V, Zr oder Hf darstellt und die Wertigkeit 0 aufweist;
M^{I}·(Aren)·Al₂X₈₋ₙR^{V} ₙ (B)
worin X Halogen darstellt, M^{I} Ti, Zr oder Hf darstellt, R^{V} einen C1-C4-Alkylrest darstellt und n eine Zahl von 0 bis 4 ist;
V·(Aren)₂·AlX₄ (C)
worin X Halogen darstellt.

6. Katalysatorkomponente nach Anspruch 5, wobei das Aren ausgewählt ist aus Benzol, Toluol, Xylol, Trimethylbenzol, Triphenylbenzol, Tetraisopropylbenzol, Tetramethylbenzol, Hexamethylbenzol, Chlorbenzol und X Chlor darstellt.

7. Katalysatorkomponente nach Anspruch 1, wobei das Magnesiumhalogenid aus der Entalkoholisierung von kugelförmigen Addukten der Formel MgX₂·nR^{I}OH, worin X Halogen darstellt, R^{I} einen C1-C12-Kohlenwasserstoffrest darstellt und n eine Zahl von 2 bis 6 ist, erhalten wird.

8. Katalysatorkomponente nach Anspruch 7, wobei das Magnesiumhalogenid MgCl₂ ist.

9. Katalysatorkomponente nach Anspruch 1, außerdem umfassend eine Elektronendonorverbindung (innerer Donor).

10. Verfahren zur Herstellung der Katalysatorkomponente nach Anspruch 1, wobei das Magnesiumhalogenid mit einer ein Aren enthaltenden Übergangsmetallverbindung in einem Lösungsmittel, ausgewählt aus der Gruppe, bestehend aus aromatischen Kohlenwasserstoffen, halogenierten Kohlenwasserstoffen und Gemischen davon, umgesetzt wird.

11. Verfahren nach Anspruch 10, wobei die Übergangsmetallverbindung mit TiCl₄ vor, während oder nach dem Kontakt mit dem Magnesiumhalogenid umgesetzt wird.

12. Katalysator zur Polymerisation von α-Olefinen der Formel CH₂=CHR, worin R Wasserstoff oder einen Kohlenwasserstoffrest mit 1 bis 10 Kohlenstoffatomen darstellt, umfassend das Reaktionsprodukt zwischen der Katalysatorkomponente nach einem der Ansprüche 1 bis 10 und einer Organometall-Aluminiumverbindung.

13. Katalysator nach Anspruch 12, wobei die Organometall-Aluminiumverbindung eine Al-Trialkylverbindung darstellt.

14. Katalysator nach Anspruch 12, wobei die Organometall-Aluminiumverbindung ein Alumoxan darstellt.

15. Katalysator nach Anspruch 12, außerdem umfassend eine Elektronendonorverbindung (äußerer Donor).

16. Verfahren zur Polymerisation von ein oder mehreren α-Olefinen der Formel CH₂=CHR, worin R Wasserstoff oder einen Kohlenwasserstoffrest mit 1 bis 10 Kohlenstoffatomen darstellt, umfassend die Verwendung der Katalysatorkomponente nach einem der Ansprüche 1 bis 10.

17. Verfahren zur Polymerisation von ein oder mehreren α-Olefinen der Formel CH₂=CHR, worin R Wasserstoff oder einen Kohlenwasserstoffrest mit 1 bis 10 Kohlenstoffatomen darstellt, umfassend die Verwendung des Katalysators nach einem der Ansprüche 12 bis 15.

18. Verfahren zur Herstellung von Polymeren von Ethylen und Copolymeren von Ethylen, die bis zu 20 % eines α-Olefins mit 3 bis 12 Kohlenstoffatomen enthalten, umfassend die Verwendung des Katalysators nach einem der Ansprüche 12 bis 15.

19. Verfahren zur Herstellung von elastomeren Copolymeren von Ethylen mit einem α-Olefin, das 3 bis 12 Kohlenstoffatome aufweist, gegebenenfalls mit bis zu 10 Mol-% eines Diens, wobei die Copolymere 20 bis 80 Mol-% Ethyleneinheiten enthalten, umfassend die Verwendung des Katalysators nach einem der Ansprüche 12 bis 15.

20. Verfahren zur Herstellung eines kristallinen Polymers von Propylen und Copolymeren von Propylen, die bis zu 20 Mol-% Ethylen und/oder α-Olefin mit 4 bis 12 Kohlenstoffatomen enthalten, umfassend die Verwendung des Katalysators nach Anspruch 15.

## Revendications

1. Un constituant de catalyseur pour la polymérisation d'α-oléfines répondant à la formule CH₂=CHR, où R est un hydrogène ou un radical hydrocarboné comportant 1 à 10 atomes de carbone, comprenant un dérivé d'un métal de transition choisi dans le groupe consistant en Ti, V, Zr et Hf, et contenant au moins un arène, qui est supporté sur un halogénure de magnésium présentant au moins une des caractéristiques suivantes :
(I) surface spécifique supérieure à 300 m²/g ;
(II) porosité au mercure supérieure à 0,5 cm³/g.

2. Le constituant de catalyseur selon la revendication 1, dans lequel l'halogénure de magnésium est un MgCl₂, présentant une surface spécifique de 300 à 900 m²/g, une morphologie sphérique et des dimensions particulaires comprises entre 5 et 150 µm.

3. Le constituant de catalyseur selon la revendication 1, dans lequel le dihalogénure de magnésium est un MgCl₂, présentant une porosité de 0,8 à 2,2 cm³/g, une morphologie sphérique et des dimensions particulaires comprises entre 5 et 150 µm.

4. Le constituant de catalyseur selon la revendication 1, dans lequel l'arène est choisi dans le groupe consistant en benzène, toluène, xylène, triméthylbenzène, triphénylbenzène, tétraisopropylbenzène, tétraméthylbenzène, hexaméthylbenzène et chlorobenzène.

5. Le constituant de catalyseur selon la revendication 1, dans lequel le dérivé de métal de transition contenant au moins un arène répond à l'une des formules suivantes :
M₁(arène)₂ (A)
où
M est Ti, V, Zr ou Hf et a une valence 0 ;
M₁(arène).Al₂S₈₋ₙR^{V} ₐ (B)
où
X est un halogène ;
M¹ est Ti, Zr ou Hf;
R^{V} est un radical alkyle en C₁-C₄ ; et
n est un nombre de 0 à 4 ;
V.(arène)₂.AlX₄ (C)
où
X est un halogène.

6. Le constituant de catalyseur selon la revendication 5, dans lequel l'arène est choisi parmi benzène, toluène, xylène, triméthylbenzène, triphénylbenzène, tétraisopropylbenzène, tétraméthylbenzène, hexaméthylbenzène, chlorobenzène, et X est le chlore.

7. Le constituant de catalyseur selon la revendication 1, dans lequel l'halogénure de magnésium s'obtient par désalcoolisation d'adducts sphériques répondant à la formule MgX₂.nR¹OH, où X est un halogène, R¹ est un radical hydrocarboné en C₁-C₁₂ et n est un nombre compris entre 2 et 6.

8. Le constituant de catalyseur selon la revendication 7, dans lequel l'halogénure de magnésium est MgCl₂.

9. Le constituant de catalyseur selon la revendication 1, comprenant, en outre, un dérivé donneur d'électron (donneur interne).

10. Un procédé de préparation d'un constituant de catalyseur selon la revendication 1, dans lequel on fait réagir l'halogénure de magnésium avec un dérivé de métal de transition comportant un arène dans un solvant choisi dans le groupe consistant en hydrocarbures aromatiques, hydrocarbures halogénés et leurs mélanges.

11. Le procédé selon la revendication 10, dans lequel on fait réagir le dérivé de métal de transition avec TiCl₄ avant, pendant, ou après la mise en contact avec l'halogénure de magnésium.

12. Un catalyseur de polymérisation d'a-oléfines de formule CH₂=CHR, où R est un hydrogène ou un radical hydrocarboné comportant 1 à 10 atomes de carbone, comprenant le produit de la réaction entre un constituant de catalyseur selon une quelconque des revendications 1 à 10 et un dérivé organométallique de l'aluminium.

13. Le catalyseur selon la revendication 12, dans lequel le dérivé organométallique de l'aluminium est un dérivé trialkyl aluminium.

14. Le catalyseur selon la revendication 12, dans lequel le dérivé organométallique de l'aluminium est un alumoxane.

15. Le catalyseur selon la revendication 12, comprenant en outre un dérivé donneur d'électron (donneur externe).

16. Un procédé de polymérisation d'une ou plusieurs α-oléfines de formule CH₂=CHR, où R est un hydrogène ou un radical hydrocarboné comportant 1 à 10 atomes de carbone, comprenant l'utilisation d'un constituant de catalyseur selon une quelconque des revendications 1 à 10.

17. Un procédé de polymérisation d'une ou plusieurs α-oléfines de formule CH₂=CHR, où R est un hydrogène ou un radical hydrocarboné comportant 1 à 10 atomes de carbone, comprenant l'utilisation d'un catalyseur selon l'une quelconque des revendications 12 à 15.

18. Un procédé de préparation de polymères de l'éthylène et de copolymères de l'éthylène comportant jusqu'à 20 % d'une d'a-oléfine ayant de 3 à 12 atomes de carbone, comprenant l'utilisation d'un catalyseur selon l'une quelconque des revendications 12 à 15.

19. Un procédé de préparation de copolymères élastomères de l'éthylène avec une d'α-oléfine comportant de 3 à 12 atomes de carbone, éventuellement en présence de 10 % molaire d'un diène, ledits copolymères contenant de 20 % à 80 % molaire de motifs éthylène, et comprenant l'utilisation du catalyseur selon l'une quelconque des revendications 12 à 15.

20. Un procédé de préparation de polymères cristallins de propylène et de copolymères de propylène contenant jusqu'à 20 % en moles d'éthylène et/ou d'une d'α-oléfine comportant de 4 à 12 atomes de carbone, comprenant l'utilisation d'un catalyseur selon la revendication 15.
